# EUROPEAN PATENT SPECIFICATION

(11) **EP 1 285 193 B1**
(45) Date of publication and mention of the grant of the patent: **22.06.2005**
(21) Application number: 01923539.9
(22) Date of filing: 17.04.2001
(51) Int. Cl.: F16L 41/06

(54) **METHOD AND MEANS FOR MOUNTING CONNECTORS OR NOZZLES ON THIN METALLIC HIGH-PRESSURE PIPES**
VERFAHREN UND MITTEL ZUM ANBRINGEN VON VERBINDUNGEN ODER DÜSEN AUF DÜNNE METALLISCHE HOCHDRUCKROHRE
PROCEDE ET MOYEN PERMETTANT DE MONTER DES CONNECTEURS OU DES BUSES SUR DES TUYAUX HAUTE PRESSION

(30) Priority: 17.04.2000 DK 200000645
(43) Date of publication of application: 26.02.2003
(73) Proprietor: SKOV A/S, Glyngoere, 7870 Roslev (DK)
(72) Inventor: CHRISTENSEN, John, L., DK-6700 Skive (DK)
(74) Representative: Nielsen, Leif L.
(86) International application number: PCT/DK2001/000273
(87) International publication number: WO 2001/079741

(56) References cited:
- DE-A1- 2 702 547
- US-A- 915 230
- US-A- 1 336 423
- US-A- 3 870 348
- US-A- 4 955 406

## Description

The present invention concerns a method for mounting moisture atomisation nozzles on metallic high-pressure pipes, especially for high-pressure cooling plants in cowsheds or other buildings where it is desirable to bring about a combined cooling and humidifying of the air by the injection of atomised water in the air space. This demands considerable water pressure in the high-pressure pipe, for example in the order of 60-80 bar or more, and for precisely this reason it is natural for use to be made of metal pipes, which even in thin-walled configuration can withstand such high pressures.

The injection of atomised water into a cowshed provides an effective cooling of the air by the evaporation of the fine water particles, and it is normal practice that such an injection is arranged at strategic places in the cowshed in according with various criteria. Use is normally made of quite thin, stainless steel pipes, and they are provided with nozzles to suit individual needs. The mounting of the nozzles has hitherto been troublesome, in that this is effected, for example, by the soldering or welding on of stubs, the cutting of threads in pipe holes after drilling and collaring, or the drilling of holes and subsequent mounting of various clamping means, i.e. methods which are best suited for factory implementation.

US-A-4955406 describes a connector which integral means for perforating the pipe in which a branch pipe is desired to be installed. The connector is especially developed for creating branch pipes in water supply lines.

This requires extra thorough planning of the positioning of the nozzles and also great care in the production phase, and there will inevitably arise cases where the selected equipment still does not correspond to the requirements when finally mounted.

In light of this, with the invention it has been found that great advantages are offered by providing an alternative solution which makes it possible to arrange the mounting of the nozzles at the actual mounting site, completely without factory participation.

It should be noted, for example, that in connection with overhead moisturising plants, it is known to use pipes of plastic, which are pressure-loaded to a far lesser degree and which with simple means can be mounted with branching means. In US-A-5,694,972, it is thus disclosed that a branching can be established by fastening a threaded socket at a desired place on the piping by means of a clamp around the pipe, after which a coupling piece with a hollow, side-perforating tip can be tightened in for perforation of the wall of the pipe, and hereby automatically form radial sealing against the hole produced as this is gradually expanded to its final size. Such a technique does not find practical application in connection with a mounting of nozzles on the high-pressure pipes which are relevant here.

However, with the invention it has been recognised that it is possible, in a purely craftsman-like manner, to effect such local preparations of a thin-walled high-pressure pipe, so that the mounting of nozzles can be carried out at any desired place on, for example, such an already mounted pipe, i.e. with concrete regard being paid to the practical conditions for the positioning of the nozzles, and consequently without being bound to a possibly incorrect planning. The decisive aspect of the invention is that in the said preparations, use can be made of a hand-held tool with which it is possible to effect such a locally indented deformation of the wall of the thin, metallic pipe, that this is pressed in for perforation, and partly for the formation of an annular facet area around the perforation, so that this surrounding facet area, regardless of whether it is plane or conical, can thereafter serve as a seating for the nozzle-bearing coupling part, which provided with a sealing ring is tightened in against the deformation area by means of a suitable tightening or clamping ring for mounting around the pipe at the mounting point, even including by use of known clamping means. When the deformation tool has means for the rear- and side-support of the prepared pipe, the desired local deformation can be finalised without any other general deformation of the pipe, and the next mounting task thus becomes the tightening-in of the said coupling part for surface sealing against the depression formed in the pipe. Work is effected, of course, with a rather high pressure in the pipe, but the necessary contact area can be of a very modest extent, whereby an effective securing can be arranged by means of simple clamping means on the pipe itself.

The deformation tool can be coupled to a drive motor such a drilling or screwing machine, but with the invention it has been found sufficient to use a purely hand-operated tool in the shape of suitably formed tongs with a relatively long operating handle, e.g. as on a pair of hedge shears. The tool should be provided with contact means which, for a given pipe dimension, ensure that the pipe deformation can not be executed further than to a well-defined extent determined by the operator.

The clamping means for the coupling part can be configured in any suitable manner, but in connection with the invention there has been developed a special, easily mountable coupling part in the form of an injection-moulded item with an outstanding socket part for the accommodation of a calibrated nozzle insert, and with a perforated skirt part for projection in over the pipe to enable hook parts on the coupling part to be twisted into holding engagement with the side of the pipe opposite the area of deformation. These hook parts are preferably configured with projecting, channel-formed wing parts which can abut up against the rear of the pipe, and be cut off at an angle to ease the turning in of the coupling part.

In the following, the invention is explained in more detail with reference to the drawing, in which
fig. 1 is a schematic perspective view of a cowshed with high-pressure cooling plant,
fig. 2 is a perspective view of a pressure pipe and a tool for providing holes therein
fig. 3 is a sectional view of the pipe and the tool in operative position,
fig. 4 is a sectional view of the pipe and the tool,
fig. 5 and 6 are perspective views of a nozzle coupling part for mounting on the pipe,
fig. 7 and 8 are plan views for the illustration of the mounting of the nozzle coupling part on the pressure pipe,
fig. 9 is a sectional view of the finally mounted nozzle coupling part with nozzle element inserted, and
fig. 10 and 11 are illustrations of a tool according to the invention.

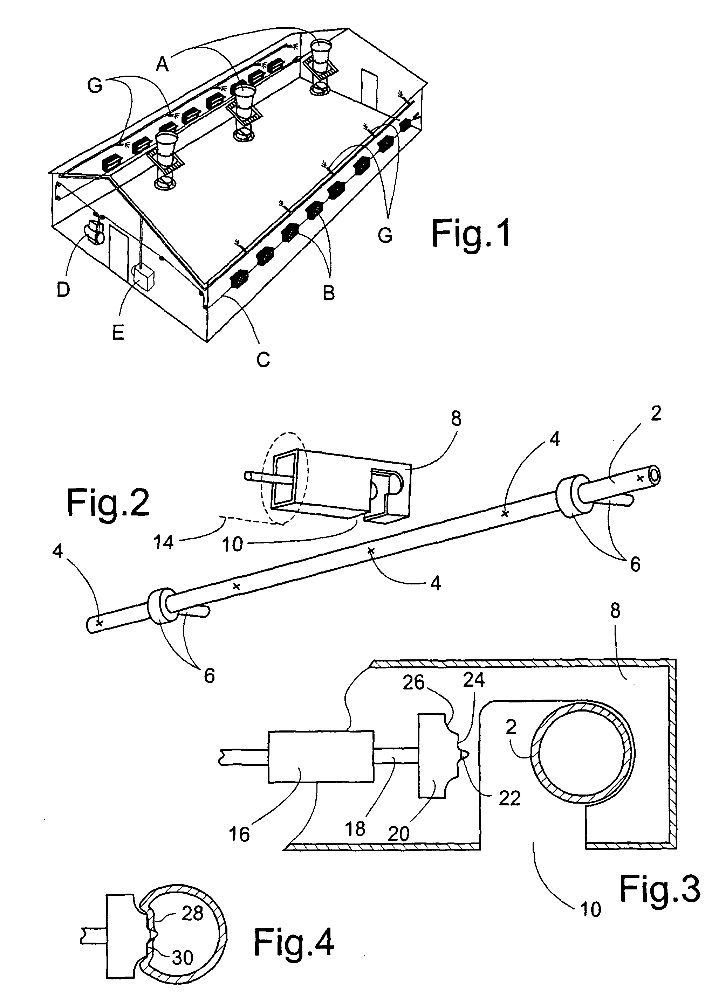

Fig. 1 shows a cowshed with chimney pipes A and wall-mounted air valves B with not-shown dampers which, by means of a draw-wire C, can be controlled from a control station D. The cowshed is also provided with a pumping station E, which through high-pressure pipe F pumps water at a pressure of e.g. 70 bar out to a series of highly-placed atomising nozzles G which, at strategic places, inject the atomised water into the air space which is hereby significantly cooled by the evaporation of the water. The relevant strategic places can be quite critical in various respects, and quite often it is experienced that the pre-selected positions of some of the nozzles G are not entirely expedient. In light of this, with the invention it is endeavoured to be able to effect the mounting of the nozzles in situ, i.e. with the possibility after the laying-out of the pipes F of placing the nozzles while taking the actual conditions in the shed into full consideration.

In fig. 2 there is shown a part section of a pressure pipe 2 which is marked with points 4 in which it is desirable to establish transversally radiating atomisation nozzles. These markings can also be made on a wall surface for mounting of the pipe, possibly with an indication of which direction in the vertical plane it is desirable to establish the emission from the nozzle. The pipe 2 is secured at a certain distance from the supporting wall or possibly a supporting ceiling by means of coupling parts 6.

There is hereby created the possibility that over the pipe 2 there can be placed a tool head in the form of a rectangular element 8, which as shown in fig. 3 is also configured with a side cut-out 10 for leading down over the pipe 2, said cut-out at its closed end having a forwardly-extending, semicircular recess 12 for the accommodation of the pipe 2. The tool head 8 is connected in a not-shown marmer with a power-driven hand-tool such as a drilling machine 14 which, via a transfer unit 16, can bring about a forwards displacement of a shaft 18 with an outer pressure tool 20 in against the inwardly-facing side of the pipe 2.

The pressure tool 20 has a central, projecting tip 22 and a surrounding plane annular surface 24, and from here an annular surface 26 which extends further outwards in a concave arc. When this tool is pressed in against the pipe 2, the pipe will be deformed as shown in fig. 4, namely with a perforation 28 of the tip 22 of the tool, and with a plane annular area 30 around this perforation, while the said annular surface 26 on the tool 20 will create a gradual transition between this plane annular area and the rest of the pipe circumference, both in the radial as well as the longitudinal direction of the pipe.

Hereafter, the pipe will stand ready to receive the nozzle coupling parts, precisely at the marked places 4.

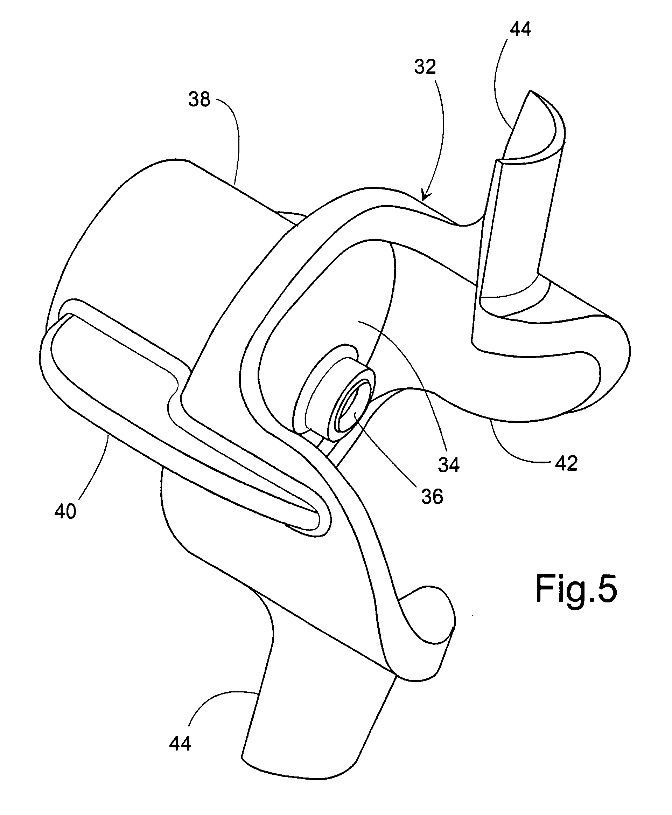

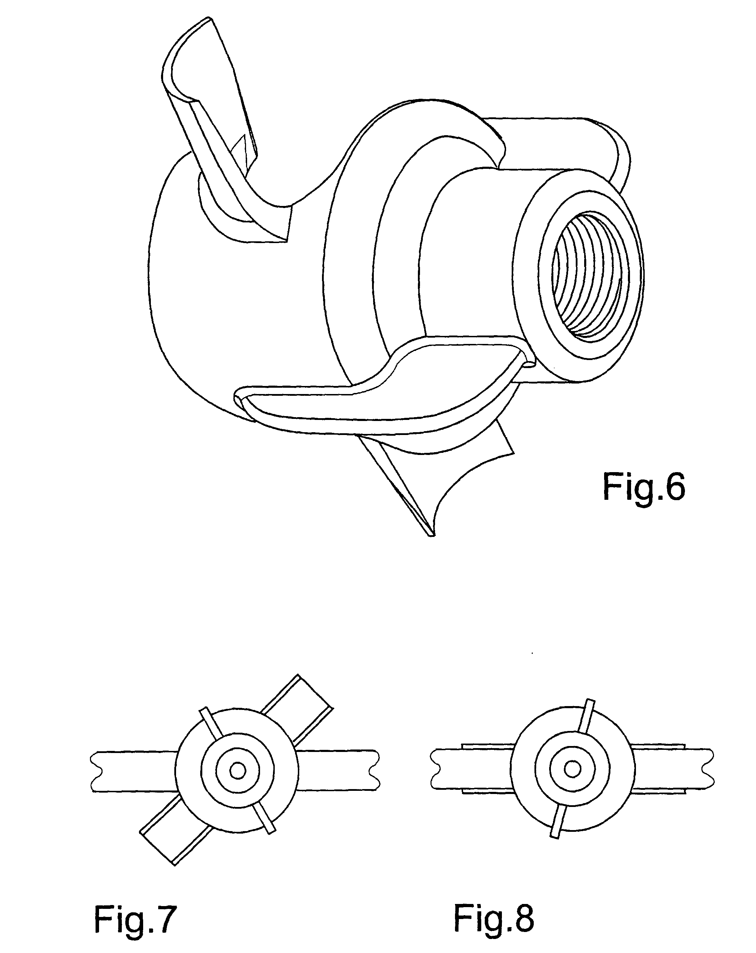

A coupling part which can be used for this purpose is shown in figs. 5 and 6. The coupling part is configured as an injection-moulded plastic item 32 with a flat intermediate wall part 34 for contact against the plane pipe surface 30, and from this wall part with a central protruding stub part 36 for sealing penetration into or connection with the pipe perforation 28 and that in connection with the wall part 34 there is provided a protruding, internally threaded pipe stub 38 which is designed to accommodate a nozzle insert, which can hereby be brought into flow connection with the pipe stub part 36 and furthermore that the stub 38 is configured with a pair of radially extending wing parts 40 which make it possible for the nozzle coupling part to be manually twisted in on the pipe 2.

On the opposite or internal side of the wall part 34, the coupling part is configured with a partly cut-away skirt part 42 extending in the same direction as the stub, the cut-away part of which allows the coupling part to be inserted over the pipe 2 with the stub 38 in abutment against the perforation 28 in the pipe. The skirt 42 has two diametrically opposed, extending shell parts 44 which are almost semi-cylindrical in shape, in that the edge which faces in towards said cut-away part is smaller in height than the opposite edge.

The relationships are thus arranged so that it hereby becomes possible for the coupling part to be turned in to a position in which the shell parts 44 snap in under or behind the pipe 2 for securing the coupling part in said position of abutment. As indicated, it is hereby sufficient for an operative abutment that the coupling part is twisted into place in a purely manual manner by use of the wings 40, cf. also figs. 7 and 8.

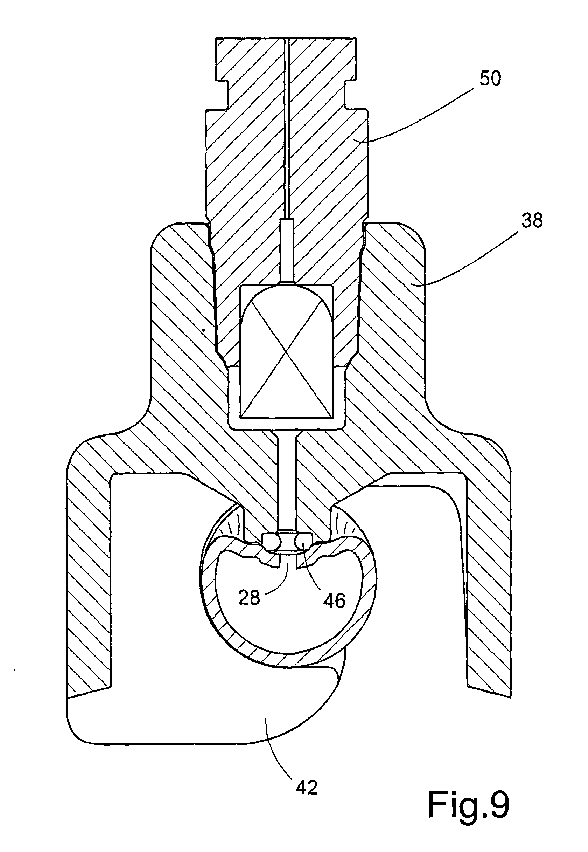

The mounted position is shown in fig. 9, which also shows that at the end of the stub part 36 there is housed a sealing ring 46 which tightens against the wall of the pipe directly around the perforation 28 when the wall part 34 of the coupling part is in contact with the annular surface 30 on the pipe.

Fig. 9 also shows that in the threaded stub 38 there is screwed a nozzle element 48 with a calibrated nozzle channel 50, preferably with intermediate bedding of a filter element 52.

It must be mentioned that the tool head 8 can be provided with a spirit level or protractor, by means of which it is easy to determine the connection points for emission in the desired angular directions. The tool in itself can otherwise be configured in many different ways, including also as a pair of tongs for clamping together against the pipe and as a stationary tool for the processing of loose pipe lengths with pre-marked mounting points for the nozzles.

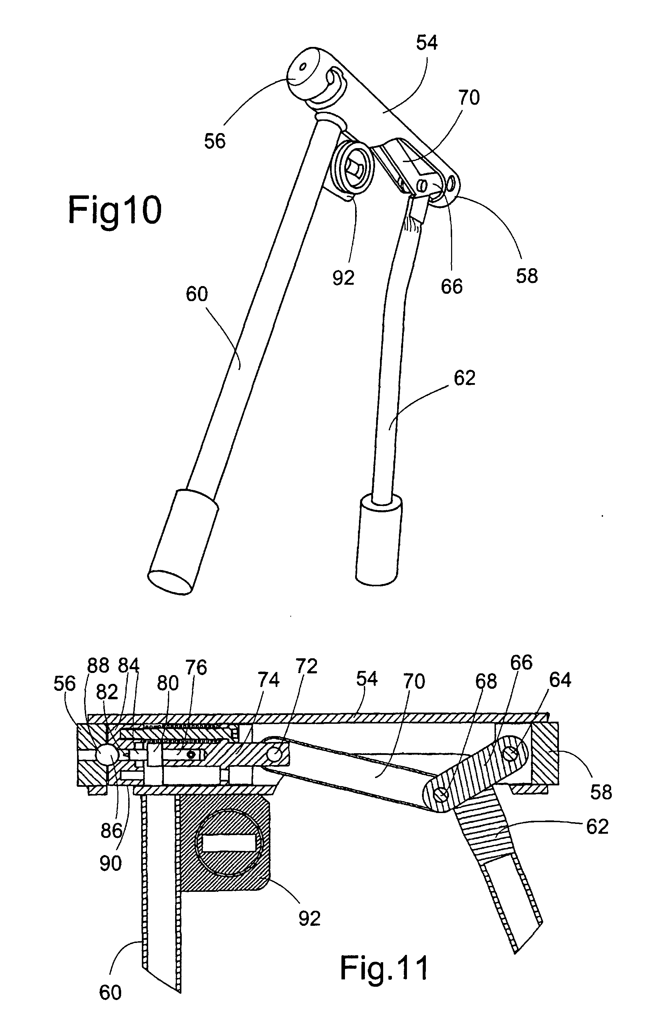

Figs. 9 and 10 show a preferred embodiment of the hand-tool for producing the said pipe deformations. The tool has an elongated guide housing 54 with closed front end 56 and rear end 58, and a foremost, fixedly mounted hand grip 60, and a corresponding rearmost hand grip 62 which is fastened to a link part 66 which is pivotal around a fixed, transverse pin 64. At 68, this link part 66 is in pivotal connection with a guide arm 70 which extends forwards to pivotal connection 72 with a plunger part 74, which at its front end houses a protruding pressure pin 76 which, in front of the plunger part 76, has an enlarged head part 78 and a pin 80 with a central, pointed tip 82. The pin 80 is housed in a bore in a block element 84 which foremost has a semi-cylindrical recess 86 directly behind a corresponding recess 88 in the front end part of the guide housing 54.

When the handle 62 is swung rearwards, the plunger part 74 is slid rearwards for the withdrawal of the block element 84, so that there is room through a slot 90 for the introduction of the front end of the tool over a pipe, which thereafter will be clamped firmly in the recesses 86 and 88 when the block element 84 is moved forwards by the swinging forward of the handle 62. By further swinging forwards of this handle, the plunger part 74 is moved forwards, whereby the clamped pipe is perforated and deformed respectively by the pointed tip 82 and the pin 80. This effect is brought to an abrupt end when the head part 78 is brought into contact against the rear of the block element 84, whereby the operator can clearly feel that the deformation has been concluded with necessary surety that it has not been driven further than prescribed.

The tool is shown provided with a fixedly mounted but adjustable spirit level 92.

## Claims

1. Method for mounting moisture atomisation nozzles on thin metallic high-pressure pipes, primarily for high-pressure cooling of cowsheds and the like, where the pipe (2) is prepared in desired places (4) for the securing of atomisation nozzles or possibly other branching elements, **characterised in that** said preparation is effected by means of a hand-held deformation tool with which - preferably in situ - there is carried out such a one-sided indentation-deformation and perforation of the wall of the pipe (2) that this is not only perforated locally, but also provided with an annular facet area (30) around the perforation (28), said facet area (30) is created by the impression of the tool (20), where the tool (20) comprises a central projecting tip (22) for perforating the pipe and a surrounding plane annular surface (24) for creating a plane annular area (30) around the perforation (28) and from said surface (24) an annular surface (26) extending further outwards in a concave arc and after removal of the hand-held tool the pipe (2) is ready to receive a nozzle (48) or other branching elements wherein a coupling part (32) with a nozzle (48) and intermediate sealing ring (46) is tightened in against the deformation area consisting of the perforation (28) and the plane annular surface (24) by means of a tightening or clamping ring for mounting around the pipe (2) at the mounting point.

2. Method according to claim 1 **characterised in that** the facet area (30) is formed as a plane annular area (24).

3. Method according to claim 1, **characterised in that** the coupling part (32), comprises a socket part with a stub part (36) for abutment in an axial direction perpendicular to the longitudinal axis of the pipe (2) against the facet area (30) via an intermediately coupled sealing ring (46), and that this socket part is mounted on the pipe (2) with a turning movement, said mounting being facilitated by the coupling part (32) being provided on the opposite or internal side of the wall part (34) with apartly cut-away skirt part (42) extending in the same direction as the stub, the cut-away part of which allows the coupling part to be inserted over the pipe (2) with the stub (38) in abutment. against the perforation (28), and where the skirt part (42) has two diametrically opposed extending shell parts (44) which are almost semi-cylindrical in shape, and adapted to snap in under or behind the pipe (2) for securing the coupling part to said pipe (2).

4. Tool for the preparation of a thin-walled metal pipe (2) for execution of the method according to claim 1, **characterised in that** it consists of a hand-held tool with clamping means (8, 56) for fastening around the pipe (2), and with a tool plunger (20) for pressing in against the side of the pipe (2), said plunger (20) having a perforating tip (22) and a surrounding collar area (24, 26), comprising a plane annular surface surrounding the tip (22), which can be pressed in to form an annular facet area (30) around the perforation (28) which the plunger tip (22) produces in the wall of the pipe (2).

5. Tool according to claim 4, **characterised in that** the tool plunger (20) is housed in a displaceable manner in a guide housing (8,56), said plunger displacement being effected by means of a relatively long handle (60, 62) extending from the tool.

6. Coupling part for mounting on a pipe by the method according to claim 1, **characterised in that** the coupling part (32) comprises a socket part and a flat intermediate wall part (34) for contact against the plane pipe surface (30), and from this wall part with a central protruding stub part (36) for sealing penetration into or connection with the pipe perforation (28) and that in connection with the wall part (34) there is provided a protruding, internally threaded pipe stub (38) which is designed to accommodate a nozzle insert, which can hereby be brought into flow connection with the pipe stub part (36) and furthermore that the stub (38) is configured with a pair of radially extending wing parts (40) which make it possible for the nozzle coupling part to be manually twisted in on the pipe (2) and that on the opposite or internal side of the wall part (34), the coupling part is configured with partly cut-away skirt part (42) extending in the same direction as the stub, the cut-away part of which allows the coupling part to be inserted over the pipe (2) with the stub (38) in abutment against the perforation (28) in the pipe.

## Patentansprüche

1. Verfahren zum Anbringen von Zerstäubungsdüsen auf dünnen metallischen Hochdruckrohren, primär zum Hochdruckkühlen von Kuhfladen und dergleichen, wobei das Rohr (2) an gewünschten Stellen (4) zur Befestigung der Zerstäubungsdüsen oder möglicher andere abzweigender Elemente präpariert wird, **dadurch gekennzeichnet, dass** die Präparierung mit Hilfe eines händisch gehaltenen Deformationswerkzeugs vorgenommen wird, mit dem - vorzugsweise in situ - eine derartige einseitige Einformungsdeformation und Perforation auf der Wandung des Rohrs (2) ausgeführt wird, dass dieses nicht nur örtlich perforiert, sondern auch mit einer ringförmigen Facettenfläche (30) um die Perforation (28) versehen wird, wobei die Facettenfläche (30) durch den Eindruck des Werkzeugs (20) erzeugt wird, wobei das Werkzeug (20) eine mittige vorstehende Spitze (22) zum Perforieren des Rohres und eine umgebende ebene ringförmige Fläche (24) zur Erzeugung eines ringförmigen Bereichs (30) um die Perforation (28) und von der Fläche (24)eine ringförmige Fläche (26), die sich nach außen in einem konkaven Bogen erstreckt, aufweist, und wobei nach Entfernen des händisch gehaltenen Werkzeugs das Rohr (2) bereit zur Aufnahme einer Düse (48) und anderer Abzweigelemente ist, wobei ein Kopplungsabschnitt (32) mit einer Düse (48) und einem zwischenliegender Dichtring (46) gegen den Deformationsbereich, der aus der Perforation (48) und der ebenen ringförmigen Fläche (24) besteht, mittels eines Spann- oder Klemmrings zur Montage um das Rohr (2) an den Montagepunkt befestigt wird.

2. Verfahren nach Anspruch 1, **dadurch gekennzeichnet, dass** der Facettenbereich (30) als ebener ringförmiger Bereich (24) gebildet wird.

3. Verfahren nach Anspruch 1, **dadurch gekennzeichnet, dass** der Kopplungsabschnitt (32) einen Sockelabschnitt mit einem Stutzenabschnitt (36) zur Anlage in einer axialen Richtung senkrecht zu der Längsachse des Rohres (2) gegen den Facettenbereich (30) über einen dazwischen gekoppelten Dichtring (46) aufweist und das dieser Sockelabschnitt auf dem Rohr (2) mit einer drehenden Bewegung montiert wird, wobei das Montieren durch den Kopplungsabschnitt (32) erleichtert wird, der auf der gegenüberliegenden oder internen Seite des Wandabschnitts (34) mit einem teilweise weggeschnittenen Schürzenabschnitt (42) vorgesehen ist, welcher sich in der selben Richtung wie der Stutzen erstreckt, wobei der weggeschnittene Abschnitt es ermöglicht, dass der Kopplungsabschnitt über das Rohr (2) mit dem Stutzen (38) in Anlage gegen die Perforation (28) eingesetzt werden kann, und wobei der Schürzenabschnitt (42) zwei sich diametral gegenüberliegend erstreckende Schalenabschnitte (44) aufweist, die eine nahezu halb-zylindrische Form haben und die unter oder hinter das Rohr zur Befestigung des Kopplungsabschnitts an dem Rohr (2) zu schnappen vermögen.

4. Werkzeug für die Präparation eines dünnwandigen Metallrohrs (2) zur Durchführung des Verfahrens gemäß Anspruch 1, **dadurch gekennzeichnet, dass** es aus einem händisch gehaltenen Werkzeug mit Klemmeinrichtungen (8, 56) zur Befestigung um das Rohr (2) herum und mit einem Werkzeugkolben (20) zum Eindrücken gegen die Seite des Rohres (2) besteht, wobei der Kolben (20) eine perforierende Spitze (22) und einen umgebenden Kragenbereich (24, 26), der eine ebene ringförmige Fläche um die Spitze (22) aufweist, besitzt, wobei der Kolben einpressbar ist, um einen dringend benötigten Facettenbereich (30) um die Perforation (28) zu bilden, die die Kolbenspitze (22) in der Wand des Rohrs (2) herstellt.

5. Werkzeug nach Anspruch 4, **dadurch gekennzeichnet, dass** der Werkzeugkolben (20) in einer verlagerbaren Form in einem Führungsgehäuse (8, 56) untergebracht ist, wobei die Kolbenverlagerung mittels einer relativ langen Handhabe (60, 62) vornehmbar ist, die sich von dem Werkzeug erstreckt.

6. Kopplungsabschnitt zur Montage auf einem Rohr mittels des verfahrensgemäßen Anspruch 1, **dadurch gekennzeichnet, dass** der Kopplungsabschnitt (32) einen Sockelabschnitt und einen flachen Zwischenwandabschnitt (34) zur Anlage gegen die ebene Rohrfläche (30) und von diesem Wandabschnitt mit einem zentralen vorstehenden Stutzenabschnitt (36) zur dichtenden Durchdringung in oder in Verbindung mit der Rohrperforation (28) aufweist, und dass im Zusammenhang mit dem Wandabschnitt (34) ein vorstehender Innengewinderohrstutzen (38) vorgesehen ist, der zur Aufnahme eines Düseneinsatzes ausgelegt ist, welcher hierdurch in Strömungsverbindung mit dem Rohrstutzenabschnitt (36) bringbar ist, und bei denen der Stutzen (38) mit einem Paarradial erstreckenden Flügelabschnitte (40) konfiguriert ist, die es dem Düsenkopplungsabschnitt ermöglichen, von Hand auf das Rohr (2) eingeschraubt zu werden, und dass die gegenüberliegenden oder internen Seite des Wandabschnitts (38) der Kopplungsabschnitt mit einem teilweise weggeschnittenen Schürzenabschnitt (42) ausgebildet ist, der sich in derselben Richtung wie der Stutzen erstreckt, wobei dieser weggeschnittene Abschnitt das Einsetzen des Kopplungsabschnitts über das Rohr (2) ermöglicht, wobei der Stutzen (38) gegen die Perforation (28) in dem Rohr anliegt.

## Revendications

1. Procédé pour le montage de buses de pulvérisation d'humidité sur des tuyaux haute pression métalliques minces, de préférence pour le refroidissement haute pression des étables de vaches et similaires, le tuyau (2) étant préparé dans des endroits souhaités (4) pour fixer les buses de pulvérisation ou éventuellement autres éléments de branchement, **caractérisé en ce que** ladite préparation est effectuée à l'aide d'un outil de déformation à main avec lequel - de préférence in situ - une telle indentation-déformation unilatérale et perforation du paroi du tuyau (2) est effectuée de sorte qu'il n'est pas seulement perforé localement, mais aussi muni d'une zone de flanc annulaire (30) autour de la perforation (28), ladite zone de flanc (30) étant créée par l'impression de l'outil (20), l'outil (20) comprenant une pointe en saillie centrale (22) pour la perforation du tuyau et une surface annulaire plane environnante (24) pour créer une zone annulaire plane (30) autour de la perforation (28) et de ladite surface (24) une surface annulaire (26) s'étendant en plus vers l'extérieur dans un arc concave et après enlèvement de l'outil à main, le tuyau (2) est prêt à recevoir une buse (48) ou d'autres éléments de branchement où une partie d'accouplement (32) avec une buse (48) et une bague d'étanchéité intermédiaire (46) est serrée contre la zone de déformation comportant la perforation (28) et la surface annulaire plane (24) à l'aide d'une bague de tension ou anneau de serrage pour monter autour du tuyau (2) à l'endroit de montage.

2. Procédé selon la revendication 1, **caractérisé en ce que** la zone de flanc (30) est formée comme une zone annulaire plane (24).

3. Procédé selon la revendication 1, **caractérisé en ce que** la partie d'accouplement (32) comprend une partie de support avec une partie de raccord (36) pour l'abutement dans une direction axiale perpendiculaire à l'axe longuitudinal du tuyau (2) contre la zone de flanc (30) via une bague d'étanchéité (46) couplée intermédiairement et que cette partie de support est montée sur le tuyau (2) avec un mouvement tournant, ledit montage étant facilité par la partie d'accouplement (32) étant prévue sur le côté opposé ou intérieur de la partie de paroi (34) avec une partie de jupe partiellement découpée (42) s'étendant dans la même direction que le raccord, dont la partie découpée permet à la partie d'accouplement d'être insérée ou-dessus du tuyau (2) avec le raccord (38) en appui contre la perforation (28) et ladite partie de jupe (42) possédant deux parties d'aile s'étendant diamétralement opposées qui sont presque demi-cylindriques en forme et adaptées à saisir en dessous de ou derrière le tuyau (2) pour fixer la partie d'accouplement audit tuyau (2).

4. Outil pour la préparation d'un tuyau métallique de paroi mince (2) pour l'exécution du procédé selon la revendication 1, **caractérisé en ce qu'**il est constitué d'un outil à main avec des organes de serrage (8, 56) pour la fixation autour du tuyau (2) et avec un plongeur d'outil (20) pour presser contre le côté du tuyau (2), ledit plongeur (20) possédant une pointe (22) perforante et une zone de col environnante (24, 26) comprenant une surface annulaire plane entourant la pointe (22), laquelle zone peut être pressée pour former une zone de flanc annulaire (30) autour de la perforation (28) que la pointe du plongeur (22) produit dans le paroi du tuyau (2).

5. Outil selon la revendication 4, **caractérisé en ce que** le plongeur d'outil (20) est logé de manière deplaçable dans un carter de guidage (8, 56), ledit déplacement de plongeur étant effectué à l'aide d'une poingée relativement longue (60, 62) s'étendant de l'outil.

6. Partie d'accouplement pour le montage sur un tuyau par le procédé selon la revendication 1, **caractérisée en ce que** la partie d'accouplement (32) comporte une partie de support et une partie de paroi plate intermédiaire (34) pour l'appui contre la surface plane du tuyau (30), et à partir de cette partie de paroi avec une partie de raccord centrale en saillie (36) pour l'étanchéité de la pénétration dans ou de la connexion avec la perforation du tuyau (28) et que en connexion avec la partie de paroi (34) un raccord de tuyau filetée en saillie vers l'intérieur (38) est prévu qui est destiné à loger une insertion de buse qui de cette façon peut être mise en connexion de flux avec la partie de raccord du tuyau (36) et en plus que le raccord (38) est formé avec une paire de partie d'ailes s'étendant radialement (40) qui permet à la partie d'accouplement de la buse d'être vissée manuellement dans le tuyau (2) et que sur le côté opposé ou intérieur de la partie de paroi (34), la partie d'accouplement est formée avec une partie de jupe partiellement découpée (42) s'étendant dans la même direction que le raccord, dont la partie découpée permet à la partie d'accouplement d'être insérée au dessus du tuyau (2) avec le raccord (38) en abutement contre la perforation (28) du tuyau.
